## Europäisches Patentamt

## European Patent Office

## Office européen des brevets

(11) Publication number: **0 105 084**
A2

(12) **EUROPEAN PATENT APPLICATION**

(21) Application number: **83105528.0**

(22) Date of filing: **04.06.83**

(51) Int. Cl.³: **F 01 M 11/06**

(30) Priority: **10.06.82 IT 2180382**

(43) Date of publication of application: **11.04.84**
**Bulletin 84/15**

(84) Designated Contracting States: **BE CH DE FR GB LI NL SE**

(71) Applicant: **Oli Motor Control S.r.l., Via Piave, 76, I-20089 Quinto Stampi-Rozzano Milano (IT)**

(72) Inventor: **Frugoni, Concetta, Via Sartori, 17, I-36061 Bassano Del Grappa Vicenza (IT)**
Inventor: **Marni, Francesca, Via F.lli Rosselli, 21/4, I-20139 Milano (IT)**

(74) Representative: **Modiano, Guido et al, MODIANO, JOSIF, PISANTY & STAUB Modiano & Associati Via Meravigli, 16, I-20123 Milan (IT)**

(54) **Device for keeping the lubricant level constant in an internal combustion engine.**

(57) This invention relates to a device for automatically keeping lubricating oil to level in internal combustion engine oil pans, which device comprises a tubular stick (1) effective to be inserted into the engine oil pan (4) of an internal combustion engine and positioned with its bottom port substantially at the level to be maintained for the oil in the pan with the engine in operation.

The cited tubular stick (1) is connected, externally to said engine, to the middle leg (9) of a branching off fitting (10) which has a first leg (11) connected to a first line (12) and open to the bottom of an auxiliary oil reservoir (20), and a second leg (14) connected to a second line (15) open to the top of said auxiliary reservoir (20). The cited auxiliary reservoir (20) is a sealed one and located at a higher level than the engine oil level to be maintained within said oil pan (4).

## DEVICE FOR AUTOMATICALLY KEEPING LUBRICATING OIL
## TO LEVEL IN INTERNAL COMBUSTION ENGINE OIL PANS

This invention relates to a device for automatically keeping lubricating oil to level in internal combustion engine oil pans.

As is known, with internal combustion engines, and particularly engines installed on motor vehicles, it is advisable that the level of the lubricating oil in the engine oil pan be kept at an optimum height, i.e. at an intermediate level between a top level and bottom level. Adjustment of the oil level is currently performed by manually checking on occasions the oil level through a standard dipstick and adding oil as necessary.

It should be appreciated that this procedure requires some care by the user, the risk being, if the user forgets to check the oil level, that of causing serious damage to the engine.

To obviate such problems, a dipstick has been introduced commercially for automatically checking the oil level, which comprises in practice a metal tube provided, at the bottom end thereof, with a swivelling buoyant portion which is hingedly connected to the remaining portion of the dipstick and arranged, as the oil level drops below a preset desired level and by virtue of the swinging movement of the buoyant portion, to restore the oil to level by means of an auxiliary lube oil reservoir being connected to the tubular dipstick through a line.

This dipstick design, while being workable in principle, has shown to be difficult to apply,

0105084

because unsuitable for installation on several types of engines, and on account of jamming failure of the swivelling portion which, in some particular attitudes, cannot follow the changing level of the oil in the pan and remains blocked with respect to the remaining portion.

Thus the task of this invention is to remove such prior drawbacks by providing a device for automatically keeping engine oil to level, which comprises no moving parts or parts difficult to manufacture.

Within that task, it is an object of the invention to provide a device which, owing to its simple construction, may be readily installed on any motor-vehicle engines, its installation and application to a particular engine posing no problems.

It is a further object of the invention to provide a device which, owing to its peculiar construction, can give full assurance of being reliable and safe to use.

A not unimportant object of this invention is to provide a device which can be readily constructed from commercially available elements and materials, while being highly competitive from a purely economical standpoint.

These and other objects  such as will be apparent hereinafter, are achieved by a device for automatically keeping lubricating oil to level in internal combustion engine oil pans, according to the invention, characterised in that it comprises a tubular stick effective to be inserted into the lubricating oil pan of an internal combustion engine and positioned with the bottom port thereof substantially at the same level as the oil level to be maintained in said oil pan with the engine in operation, said tubular stick being connected, externally to said engine, to the middle leg of a branch-off fitting having a first leg connected to a first line open to the bottom of an auxiliary oil reservoir and a second leg connected to a second line open to the top of said auxiliary oil reservoir, said auxiliary oil reservoir being sealable tight and located above said oil level.

Further features and advantages will be more readily apparent from the following description of a preferred, though not exclusive, embodiment of a device for automatically keeping the lubricating oil to level in internal combustion engine oil pans according to this invention, as illustrated by way of example only in the accompanying drawings, where:

Figure 1 shows schematically the inventive device as applied to an engine;

Figure 2 is an enlarged scale detail view of the branch-off fitting;

Figure 3 shows the device with the engine inoperative;

Figure 4 shows the device as applied to an engine in normal operating conditions; and

Figure 5 shows the device as applied to an engine, in the condition where the oil level in the oil pan drops below its proper level.

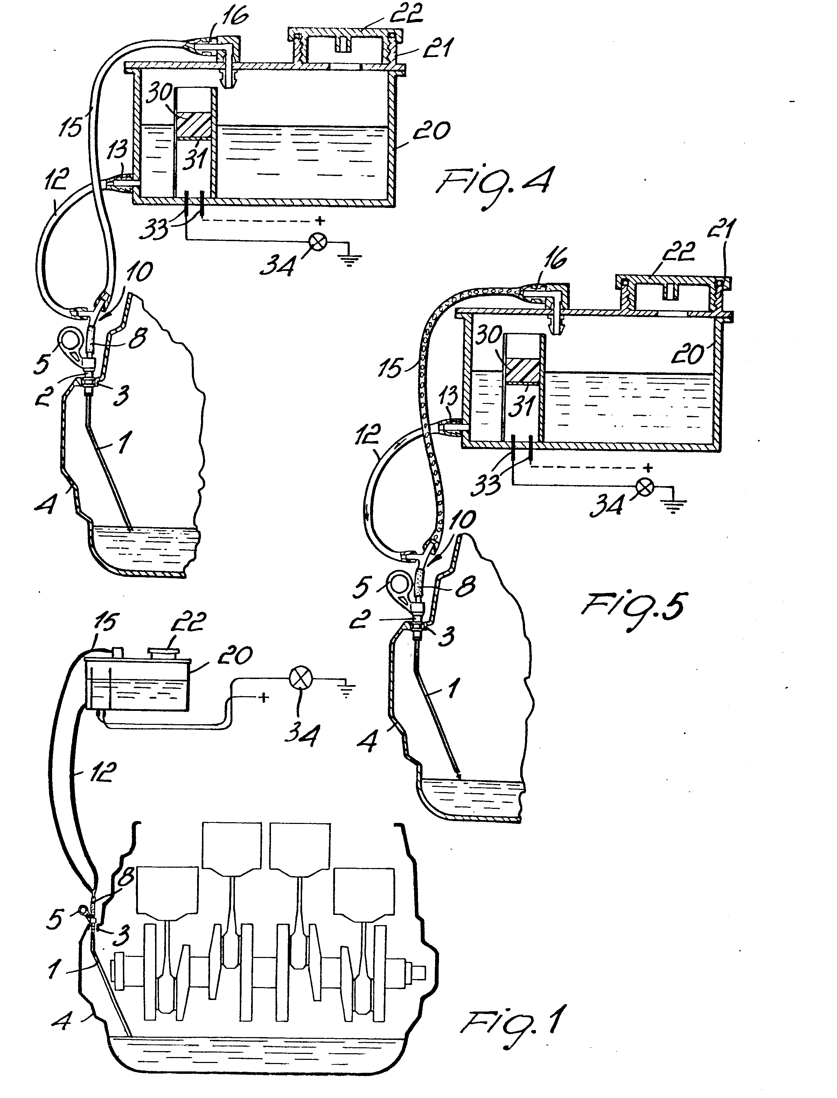

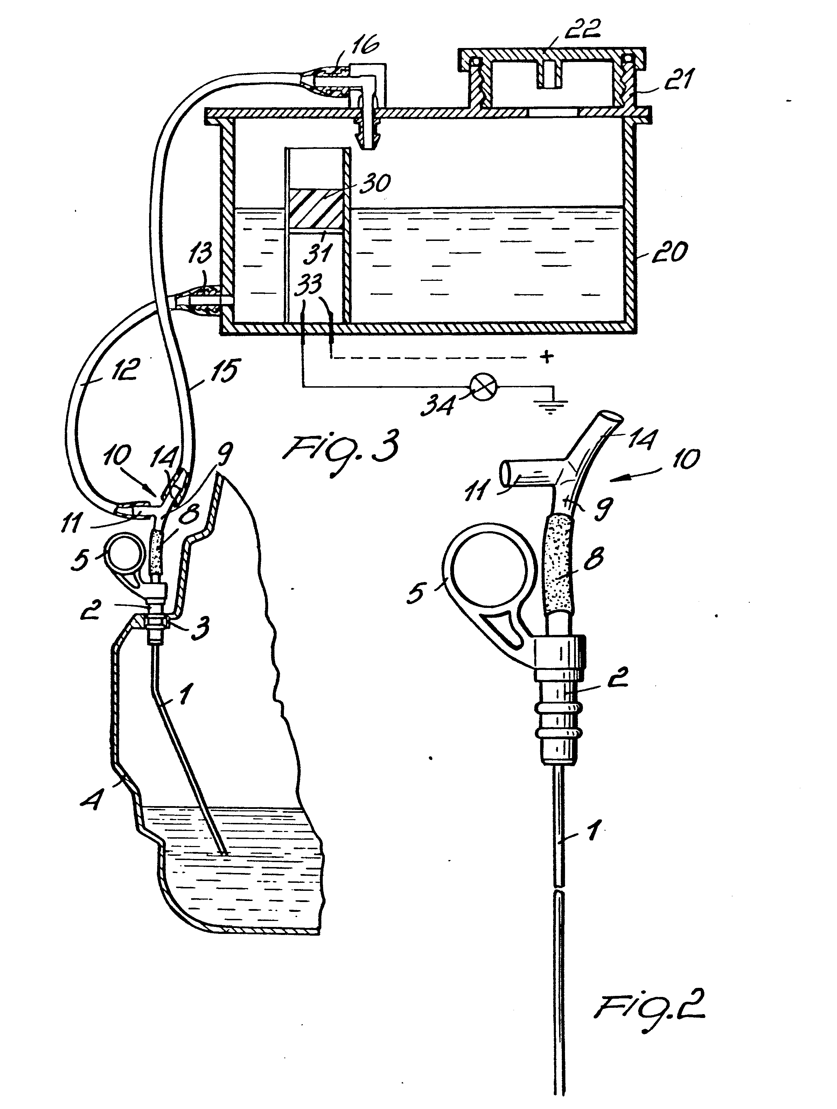

Making reference to the cited figures, the device for automatically keeping lubricating oil to level in internal combustion engine oil pans, according to the invention, comprises a tubular stick 1 which has, located at its top end, a ring nut 2 of a type known per se, which can be inserted, not unlike conventional dipsticks, into an access hole 3 provided in the oil pan of an engine and generally indicated at 4.

The ring nut 2, which includes sealing gaskets in accordance with general practice, has a ring-like handgrip 5, which is advantageously made short to avert unnecessary vibration with the engine being operated.

Said tubular stick 1, which is of internally hollow construction, is connected, with its top end and externally to the engine, through a hose piece 8 to the middle leg 9 of a branch-off fitting, generally designated with the reference numeral 10.

The branch-off fitting 10 has a first leg 11 which is connected, via a first flexible line 12, to the bottom of an auxiliary oil reservoir 20 for storing spare oil therein as will be explained hereinafter.

Advantageously, provided at the bottom of the reservoir 20 is an inlet fitting 13 for connection to the first line 12.

The second leg 14 of the branch-off fitting 10 is connected, via a second line 15 also preferably of the flexible variety, to the top portion of the reservoir 20; here too there is provided a fitting indicated at 16.

The branch-off fitting is advantageously formed such that the angle included between the middle leg 9 and first leg 11 is smaller than the angle formed between the middle leg 9 and second leg 14.

According to a preferred arrangement, the middle leg 9 extends substantially vertically, whereas the first leg 11 is substantially horizontal.

On the inside of the cited auxiliary oil reservoir 20, there is provided a float element 30 which carries a contact plate 31 adapted to close the electric connection between contacts 33 of a warning lamp 34 having the function of warning the empty condition of the reservoir 20.

The reservoir 20 is provided at the top with a filler pipe 21 sealingly closed by a cap 22.

The cited tubular stick 1 is positioned inside the oil pan such that its bottom end port is located substantially at the same level as the oil level to be maintained within the oil pan with the engine in operation.

With the arrangement just described, it occurs that in normal conditions, since the reservoir is closed tight, there is formed above the free surface of the oil within the reservoir a degree of negative pressure, thereby the downflow of oil into the engine pan is prevented owing to the downwardly directed gravity force applied to the oil from the auxiliary reservoir to the engine oil pan is practically counteracted by the negative pressure present on the auxiliary reservoir interior and by the hydraulic losses occurring across the line.

In this condition, therefore, with the bottom end port of the stick submerged by the pan oil, no oil flow can take place from the auxiliary reservoir to the engine.

In the event that (Figure 5) the oil level in the pan drops below its optimum value, the bottom port of the tubular stick 1 would be uncovered, thus putting the stick in communication with the air present above the level of the oil in the engine oil pan.

In this condition, air bubbles would move upwards through the stick to reach the branch-off fitting, whereat, owing to the peculiar configuration of the fitting described hereinabove, they are practically conducted through the second leg, since the latter affords them a preferential passageway.

From the second leg, the bubbles rise into the auxiliary reservoir above the level of the oil therein, thus changing the negative pressure value and allowing oil particles to flow down from the auxiliary reservoir containing them, through the first line into the engine oil pan, thus gradually restoring the oil level within the engine crankcase.

The bubbles will continue to rise and oil to flow down until the proper oil level is re-established inside the oil pan, thereby the bottom end port of the tubular stick 1 is submerged by the oil and the

0105084

air bubble upflow interrupted.

As the engine is shut down, owing to the oil being returned to the oil pan, the oil level will rise within the pan, thus stopping the oil supply flow.

Upon restarting the engine, the oil level will drop again, and if found below the preset optimum level, air bubbles will again move up to the reservoir, with consequent slow downflow of oil into the pan until the oil therein has reached the preset level.

When the auxiliary reservoir oil is exhausted, the float 30 will move down and bring its contact plate 31 to electrically connect the contacts 33 together, thus giving a warning, through the warning lamp 34 located inside the vehicle, of the empty condition of the reservoir, so that the operator is only required to add an amount of oil into the reservoir after removing the cap 22 and then closing it tightly again.

It will be appreciated from the foregoing description that the invention achieves its objects, and in particular that the inventive device enables the oil level to be maintained automatically within a compartment without the provision of any moving parts, but by simple utilization of the oil free fall by gravity, which only occurs upon the air bubbles being released through the tubular stick to the top portion of the reservoir.

The provision of the second line which opens to the reservoir top is effective to prevent any air bubbles from becoming trapped in the oil downflow line, thus hindering it, even where the oil level inside the oil pan has dropped below the preset value.

The invention as conceived is susceptible to many modifications and variations without departing from the scope of the instant inventive concept.

Moreover, all of the details may be replaced with other technically equivalent elements.

In practicing the invention, the materials used, as well as the dimensions and contingent shapes, may be any selected ones to meet individual applicational requirements.

CLAIMS

1. A device for automatically keeping lubricating oil to level in internal combustion engine oil pans, characterised in that it comprises a tubular stick (1) effective to be inserted into the lubricating oil pan (4) of an internal combustion engine and positioned with the bottom port thereof substantially at the same level as the oil level to be maintained in said oil pan (4) with the engine in operation, said tubular stick (1) being connected, externally to said engine, to the middle leg (9) of a branch-off fitting (10) having a first leg (11) connected to a first line (12) open to the bottom of an auxiliary oil reservoir (20) and a second leg (14) connected to a second line (15) open to the top of said auxiliary oil reservoir (20), said auxiliary oil reservoir (20) being sealable tight and located above said oil level.

2. A device for automatically keeping lubricating oil to level, according to Claim 1, characterised in that the middle leg (9) of said branch-off fitting (10) forms, with said first leg (11), a smaller angle than the angle formed with said second leg (14) to provide a preferential passageway for air bubbles ascending through said tubular stick (1).

3. A device for automatically keeping lubricating oil to level, according to the preceding claims , characterised in that said branch-off fitting (10) is connected to said tubular stick (1) through a flexible hose piece (8).

4. A device for automatically keeping lubricating oil to level, according to the preceding claims , characterised in that it comprises, located internally to said auxiliary reservoir (20), a float (30) carrying a contact plate (31) adapted to engage with contacts (33) driving a warning lamp (34) of the empty condition of said auxiliary oil reservoir (20).

5. A device for automatically keeping lubricating oil to level, according to one or more of the preceding claims, characterised in that said auxiliary reservoir (20) is provided at the top with a filler pipe (21) closeable sealingly by a cap (22).

6. A device for automatically keeping lubricating oil to level, characterised in that it comprises one or more of the features herein described and/or illustrated.

Fig.4

Fig.5

Fig.1

0105084

Fig.3

Fig.2